# EUROPEAN PATENT APPLICATION

(11) **EP 1 211 815 A2**
(43) Date of publication of application: **05.06.2002**
(21) Application number: 01126974.3
(22) Date of filing: 13.11.2001
(51) Int. Cl.: H04B 1/38, H04B 15/00

(54) **Oscillation prevention circuit**

(30) Priority: 21.11.2000 JP 2000354193; 30.03.2001 JP 2001099299
(71) Applicant: School Juridical Person of Fukuoka Kogyo Daigaku, Fukuoka (JP); Nap Enterprise Co., Ltd., Kasuya-gun, Fukuoka (JP)
(72) Inventor: Seto, Shinji, Kasuya-gun, Fukuoka (JP); Taniguchi, Yasutoshi, School Juridical Person of, Higashi-ku, Fukuoka (JP)
(74) Representative: Hughes, Andrea Michelle

(57) **Abstract**

The oscillation prevention circuit according to the present invention is used for two-point interactive communication between two communication equipment connected to each other via a transmission system, and either one of the two communication equipment has a means for preventing the oscillation phenomenon which occurs between the two communication equipment.

## Description

The present invention relates to an oscillation prevention circuit which is incorporated in various types of communication equipment such as a slave handset for mobile communication such as mobile-phones, general telephones, all types of earphones, translation machines, microphones for the deaf-and-dumb or other vocal chord damaged people, communication equipment for guides for tourism services, communication equipment for announcers, communication equipment for conductors working in trains, and headsets for operators, and also which is used in preventing oscillation in the communication equipment as described above.

As communication equipment, there have been known, for instance, wired and wireless slave handsets used for mobile communication with mobile-phones or the like. When interactive communication is performed between a slave handset and a parent telephone set and further communication equipment via a transmission system including a radio wave relay section for telephone services, sometimes a loop including sound waves propagating in a space of transmitter/receiver sections of the two communication apparatus may be formed due to electrical connection, which may in turn generate oscillation. As this phenomenon of oscillation occurs when a loop gain due to the electrical connection is 1 or more, it is desired to suppress the loop gain to less than 1, countermeasures are required to solve the problems that a transmitter section (a microphone) and a receiver section (a speaker or an earphone) can not be integrated with each other or installed at the same section, nor can they be too close to each other, or that a gain of the communication equipment can not be made larger. There are many difficulties in reduction of noise, size, weight, and production cost in either wired or wireless type of communication equipment.

It is an object of the present invention to provide, for solving the problems in the conventional technology as described above, an oscillation prevention circuit in which the oscillation phenomenon does not occur between transmitter/receiver sections of the two communication apparatus, the transmitter section and receiver section can be arranged at the same place or at positions close to each other, and a gain adjustment is not required for prevention of oscillation, and also which enables stable interactive communication.

To achieve the object as described above, the present invention provides an oscillation prevention circuit used for interactive communication between a first communication apparatus and a second communication apparatus at another point connected to each other via a transmission system, wherein a means for preventing an oscillation phenomenon occurring between transmitter/receiver sections in the two communication apparatus is provided in either one of the two communication apparatus.

By providing the oscillation prevention means, it is possible to provide a transmitter section and a receiver section at the same place or at positions close to each other without causing the oscillation phenomenon between transmitter/receiver sections in the two equipment. Further as gain adjustment for prevention of oscillation is not required, there is no restriction on volume of sound, which enables stable interactive communication. Especially with this means, interactive communication can be performed without being affected from outside at all, which is ground-breaking. In addition, as the configuration is very simple, the production cost can be suppressed to a relatively lower level, and also reduction in size and weight is possible.

Preferred embodiments of the invention will now be described, by way of example only, with reference to the drawings.
Fig. 1 is a general block diagram showing one embodiment of this invention;
Fig. 2 is a side view showing a transmitter/receiver in a slave handset;
Fig. 3 is a block diagram showing an oscillation prevention means and other components incorporated in the transmitter/receiver in the slave handset;
Fig. 4 is a view showing switching timing in a switch circuit;
Fig. 5 is a general block diagram showing an example in which a transmitter/receive in a parent telephone set is connected to an earphone terminal; and
Fig. 6 is a general block diagram showing an example in which a transmitter/receiver is incorporated in a parent telephone.

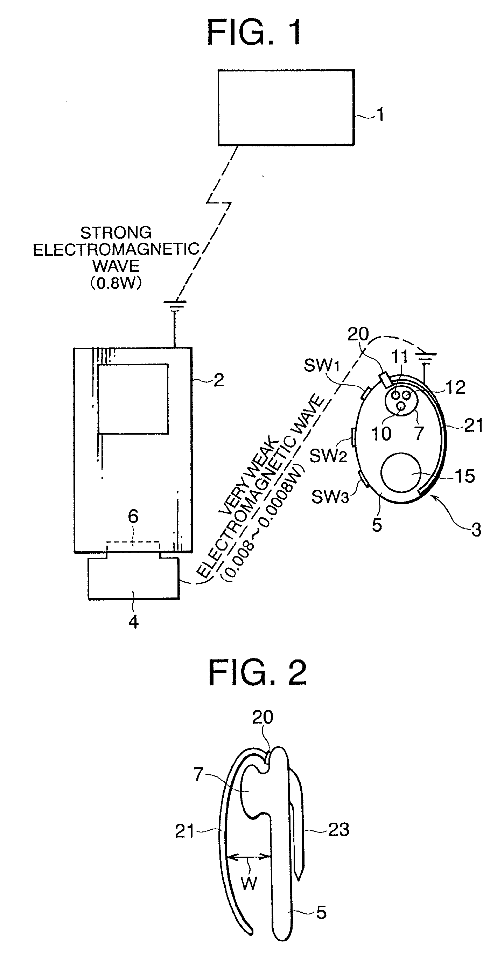

In the embodiment shown in the drawings, the present invention is embodied as a slave handset for mobile communication with a mobile-phone or the like. The general environment for use of this slave handset for mobile communication is as shown in Fig. 1 and Fig. 2, and in these figures, the reference numeral 1 indicates a radio wave relay section for a telephone which is installed, for instance, in a master station of Nippon Telephone and Telegraph Company (NTT) and controls radio waves for mobile communication with a mobile-phone or the like. The reference numeral 2 indicates a mobile-phone for mobile communication which receives radio waves (strong electromagnetic waves) transmitted from the radio wave relay section 1, and has functions of a normal telephone set such as a transmitter and a receiver. A strong electromagnetic wave as a radio wave transmitted from the radio wave relay section 1 35 is an electromagnetic wave with a prespecified frequency in accordance with the Japanese Electromagnetic Wave Law, and the transmission power is about 0.8 W. The reference numeral 3 is a slave handset for the mobile-phone 2, and this mobile-phone 2 comprises a transmitter/receiver 4 in the parent telephone set ( first transmitter/receiver) and a transmitter/ receiver 5 in the slave handset (second transmitter/receiver). Transmitter/receiver 4 is dismountably attached to an external connection terminal 6 of the mobile-phone 2, and when the mobile-phone 2 receives a radio wave, the transmitter/receiver 4 transmits an electromagnetic wave which is weaker than the radio wave above to transmitter/receiver 5. This electromagnetic wave is so weak that it does not infringe the restrictions by the Japanese Electric Wave Law. For instance, the wave reaches only within about 5m. The transmitter/receiver 5 receives the very weak electromagnetic wave from the transmitter/receiver 15 4, and notifies the mobile-phone 2 of reception of the electromagnetic wave. The transmitter/receiver 5 is smaller than the mobile-phone 2, in other words, it has a very compact size, such as that of a hearing aid, and may be dismountably attached to a person carrying the mobile-phone 2.

A transmission power for the very weak electromagnetic wave transmitted and received between the transmitter/receiver 4 and transmitter/receiver 5 should be less than 0.008 W, and preferably should be in the range from 0.008 to 0.0008 W, so that the transmission power for the very weak electromagnetic wave is substantially lower as compared to the transmission power of 0.8 W for a strong electromagnetic wave. As the transmission power for a very weak electromagnetic wave is set to a low value as described above, the various troubles which have been given rise to social concerns, such as those caused by electromagnetic waves, are eliminated, and the transmitter can safely be attached to a body of a user. In other words, it is generally said that, where the mobile-phone 2 is used at a position very close to a user's ear, the strong electromagnetic wave transmitted with the transmission power of 0.8 W causes bad effects on the user's brain wave, and several telephone companies have been sued. However, when a call is placed from the transmitter/receiver 5 based on the recognition that the mobile-phone 2 is a movable relay station, as the transmission power of the transmitter/receiver 5 is very weak, about 1/100 to 1/1000 of that for the mobile-phone 2, the degree of influence by troubles caused by electromagnetic waves is substantially reduced.

In the transmitter/ receiver 5, a transmitter/receiver section 7 having a size which is small enough to be set in a human ear is provided integrally or monolithically therewith and projects from a surface thereof. The transmitter/ receiver section 7 has a microphone 10 for talking, a speaker 11 for alerting an incoming call and a speaker 12 for talking provided therein. The reference numeral 15 indicates a chargeable battery cell. SW₁ indicates a switch for turning ON/OFF a melody sound announcing that the mobile-phone 2 is now receiving a call, with a short touch, and also for turning ON/OFF the transmitter/receiver S itself with a long touch. SW₂ indicates a switch enabling communication when any partner is selected from a plurality of partners registered 20 in a directory memory incorporated in the mobile-phone 2. For instance, if the figures of 001, 002 and 003 are registered in the directory memory in the mobile-phone 2, and when 003 is to be selected, the switch SW₂ is touched three times. With this operation, the partner having been registered at the figure of 003 is selected. In addition, message transactions can be performed using such functions as the function mode, drive mode, and message delivery each programmed in the mobile-phone 2 concurrently. SW₃ indicates a switch for turning ON/OFF a call to and from the 30 mobile-phone 2 performed via the slave handset 3. The transmitter/receiver 5 of the slave handset 3 is hung on a user's ear with a hook 21 attached via an open/close hinge section 20 to a surface side thereof as shown in Fig. 2, or is attached to a chest pocket with a hook 23 attached to a rear surface thereof, or on an inner string. The sign W in Fig. 2 indicates an open/close width of the hook 21.

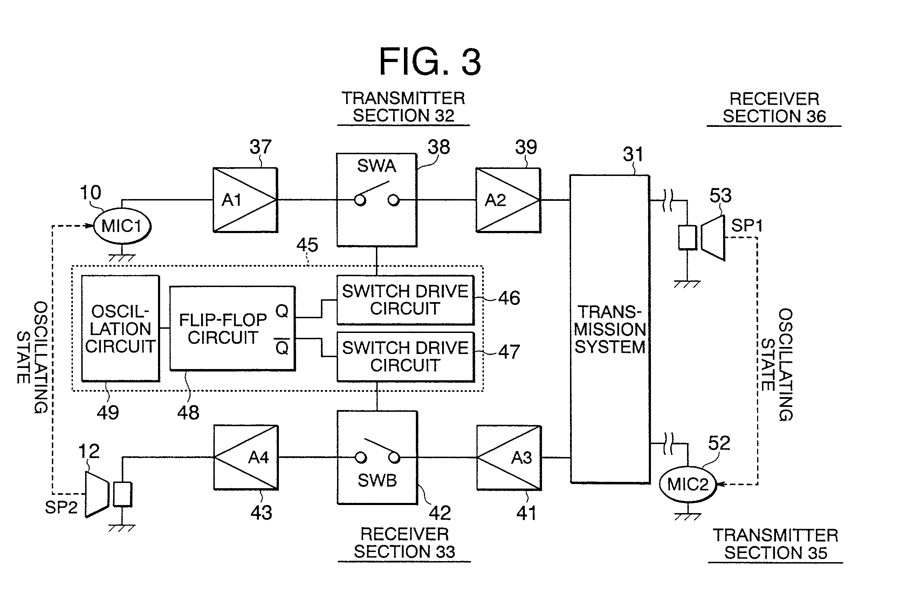

Fig. 3 is a block diagram showing an oscillation phenomenon prevention means or the like incorporated in the transmitter/receiver 5, and the ordinary transmitter/receiver circuit, and the switches SW₁ to SW₃ are not shown. The reference numeral 31 is a transmission system including the mobile-phone 2 or the radio wave relay section 1. To the left of the transmission system is shown, for instance, a transmitter section 32 and a receiver section 33 used by the calling party's side provided in the transmitter/receiver section 7 of the transmitter/receiver 5. To the right side of the transmission system is shown a transmitter section 35 and a receiver section 36 provided in a transmitter/receiver section of a communication apparatus provided in the called party's side. The transmitter section 32 in the calling party's side comprises a microphone 10 an amplifier circuit 37 and a switch circuit 38 for turning ON or OFF a flow of signals, and an amplifier circuit 39. The receiver section 33 comprises an amplifier circuit 41, a switch circuit 42 for turning ON or OFF a flow of signals, an amplifier circuit 43, and the speaker 12.

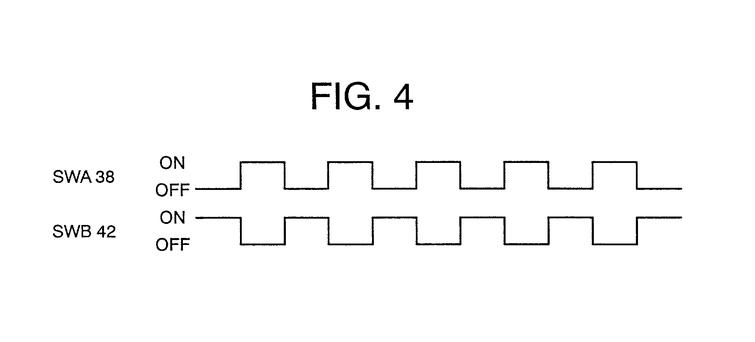

Connected to the switch circuit 38 and switch circuit 42 is a control circuit 45 for controlling ON/OFF of the two switch circuits 38, 42 by generating a clock pulse. The switch circuits 38, 42 and the control circuit 45 constitute the oscillation phenomenon prevention means. The control circuit 45 comprises switch drive circuits 46, 47, a flip-flop circuit 48, and an oscillation circuit 49. A switch drive circuit 46 is connected to the switch circuit 38, and a switch drive circuit 47 is connected to the switch circuit 42. The flip-flop circuit 48 is connected to the two switch drive circuits 46, 47, and when the switch circuit 38 is turned ON by the two switch drive circuits, the switch circuit 42 is OFF, and when the switch circuit 42 is ON, the switch circuit 38 is OFF, so that the two switch circuits 38, 42 are never turned ON simultaneously. Fig. 4 shows the switch timing for the two switch circuits 38, 42. Further the oscillation circuit 49 is connected to the flip-flop circuit 48 to run the flip-flop circuit 48. This figure shows only a portion of the transmitter section 35 and receiver section 36 provided in the called party's side, and the amplifier circuit or the like are not shown in the figure. Namely the transmitter section 35 in the called party's side has a microphone 52, and the receiver section 36 has a speaker 53.

If any two of the switches SW₁ to SW₃ (for instance, switches SW₁ and SW₂) are turned ON simultaneously during communication, the microphone 10 of the transmitter section 32 is turned OFF, so that a caller's voice is not delivered to the called party's side, and when any two of the switches are turned ON simultaneously (for instance, switches SW₁, SW₂), the microphone 10 in the transmitter section 32 is turned ON. Therefore, if any third party interrupts communications while a caller is performing communication with the slave handset 3, talk with this third party is heard by the called party, but with the configuration in which the microphone 10 is turned OFF as described above, the possibility that talk with a third party is heard by the called party can be prevented.

When used, the transmitter/receiver 4 is attached to the external connection terminal 6 of the mobile-phone 2, and at the same time, if required because of peripheral noise, the transmitter/receiver 5 is hung like a hearing aid on an ear of the user so that the transmitter/receiver section 7 is just set in the user's ear. In this case, to prevent the phenomenon that electromagnetic waves from the caller's side hardly reach the called party's side, the distance between the transmitter/receiver 5 and the mobile-phone 2 should preferably be within 3 m. Further by making use of the characteristic, it is possible to introduce a function providing an alarm sound alerting that transmission and reception have been disabled, e. g. for security or for preventing the mobile-phone being left when the distance between the transmitter/receiver 5 and the mobile-phone 2 is large. With the additional function as described above, when the switch SW₁ of the transmitter/receiver 5 is turned ON with a long touch, the mobile-phone 2 and the slave handset 3 are set in the stand-by state and wait for receiving or transmitting of a call.

When a call is set in the mobile-phone 2, the mobile-phone 2 is switched from the stand-by mode to the communication mode, and the transmitter/receiver 4 is switched from the stand-by mode to the operation mode by a very weak electric current (0.53 mA to 0.6 mA) generated by a voltage loaded to the external connection terminal 6, and the very weak electromagnetic wave is sent to the transmitter/receiver 5 through a transmission circuit driven by a button cell or a chargeable cell incorporated in the transmitter/receiver 4, and because of the very weak electromagnetic wave, the speaker 11 for an incoming call of the transmitter/receiver 5 generates a sound alerting the incoming call almost simultaneously so that a called party notices the call is incoming to the mobile-phone 2. When a called party notices the incoming call and presses the switch SW₁ with a short touch, the melody sound is turned OFF with the operating mode set in the communication mode, and as shown in Fig. 3, a sound picked up by the microphone 10 of the transmitter section 32 is sent from the amplifier circuit 37 to the switch circuit 38. In this step, the switch circuit 38 is turned ON or OFF by the control circuit 45 generating a pulse wave with the repetition frequency in the range from 30 to 50 KHz at which, for instance, the sound can not be heard as a human voice. Namely the timing for the switch circuit 38 to turn ON is always displaced from that for the switch circuit 42 to turn ON, and in other words, switching timing control is provided so that the switch circuit 42 is turned OFF when the switch circuit 38 is ON and the switch circuit 42 is turned ON when the switch circuit 38 is OFF. Then, when a signal sent to the amplifier circuit 39 is transmitted to the transmission system 31 including the mobile-phone 2, a switching element loaded to the signal in the switch circuit 38 is removed by a filter 8 or the like added to the amplifier circuit 39, and then the signal is sent to the transmission system 31. The signal sent to the called party from the transmission system 31 is regenerated as a voice through a speaker 53 of the receiver section 36 of a mobile-phone or a telephone set at the called party's side. On the other hand, the called party having heard this regenerated voice sends out a voice to the transmission 31 through a microphone 52 of the transmitter section 35.

A signal sent from the mobile-phone 2 as a parent telephone set included in the transmission system 31 is sent from the amplifier circuit 41 of the receiver section 33 to the switch circuit 42, and is regenerated via the amplifier circuit 43 by the speaker 12 as described above. With this operation, interactive communication can be carried out.

In the interactive communication as described above, the microphone 10 of the transmitter section 32 and the speaker 12 of the receiver section 33 are arranged at positions close to each other in the normal state, and in 20 this case, sometimes the voice amplified by the speaker 12 may carry into the microphone 10, and the voice amplified via the transmission system 31 by the speaker 53 at the called party's side is carried into the microphone 52 at the called party's side to form a loop, which causes the oscillation phenomenon, but the oscillation is prevented because of ON/OFF control for the switch circuits 38, 42 by the control circuit 45 in the oscillation phenomenon prevention means described above. Especially, for instance, when the peripheral sounds caused by a train passing by or in the game centers are high, interactive communication can not be performed (because it has been impossible to integrate a microphone and a speaker with each other for picking up and generating voice signals in an ear), but with the configuration having the mechanism for preventing oscillation as described above, smooth interactive communication can be performed with the voice recognition function and without being affected by peripheral noise. Further as the function to adjust a gain or the like for preventing oscillation is not required, there is no specific restriction on adjustment of a sound volume in communication, and communication with a high volume voice is also allowable.

When communication is over, the mobile-phone 2 is turned OFF and set in the stand-by state by operating the switch SW₃. In a case where, although a called party notices that a call has been placed, the called party cannot immediately respond to the call because of the situation at the site or for some other reasons, it is possible to transmit a message concerning the function mode, drive mode, or message delivery mode or the like incorporated in the mobile-phone 2 by selecting a message with the switch SW₂.

In the case described above, if the called party uses the normal mobile-phone or other type of telephone set not having the oscillation phenomenon prevention means as described in this embodiment, there occurs any specific problem in the interactive communication, but if the called party uses a telephone set having the same oscillation phenomenon prevention means, communication fault occurs when control timing frequencies of the two oscillation phenomenon prevention means in the two communication equipment are coincident to each other or are different from each other only slightly, and in this case, a switching element added in the called party's side must be removed by a filter or the like at the called party's side before the called party sends signals such as voices to the transmission system 31.

In the case described above, to prevent both of the transmitter section 32 and receiver section 33 from being set in the communication mode simultaneously, for instance, when a power is turned ON, the oscillation circuit 49 is run first, and after control for prevention of the oscillation phenomenon is enabled, all of the circuits in the transmitter/receiver circuit including the transmitter section 32 35 and receiver section 33 are set in the stand-by state. When the power is turned OFF, the reverse operation sequence is performed.

As described above, even if the mobile-phone 2 according to this embodiment is put in a shopping bag or the like, a calling signal generated by the transmitter/receiver 4 is heard as a calling sound audible only to the user of the mobile-phone from the slave handset 3, so that the user can always get notice of the incoming call. In addition, the user is not required to take out the mobile-phone 2 from the bag or the like for performing the normal communication each time a call comes in. Therefore, the user is not required to take up the mobile-phone 2 with a hand, and this feature is very convenient and useful when the user holds a baby or a child in their arms, or is pushing a shopping cart or a baby pram or pushchair with two hands. Further in the case where the user suddenly receives a call while driving a car, the user is not required to look for the mobile-phone 2 or to set a wired ear phone in the user's ear, and can smoothly respond to the incoming call, and the safety is very high. In addition, input of collected voices received or generated by the user concentrate in the user's ear, so that the performance for shutting out external sounds is excellent, and communication can be performed very smoothly without being affected by environmental conditions such as strong winds or peripheral noise. Further the size can be minimized to that of a hearing aid, so that no trouble is caused to the user in using the mobile-phone 2.

Although not shown in the figures, data transaction can be performed through Internet by setting an optional transmitter/receiver in an extension slot of a personal computer. In this case, a security system is available so that ID data is transmitted and received between the optional transmitter/receiver set in the personal computer and the transmitter/receiver 5 and the personal computer does not work with data not transmitted unless the ID data is accepted. The radio wave is also an very weak electromagnetic wave transacted between the optional transmitter/receiver and the transmitter/receiver 5 for verification of ID data, and the power required for transmission of the very weak electromagnetic wave is in the range from 0.1 to 1 mW. Data transaction can be performed in the safe condition through the Internet by using the optional transmitter/receiver as described above, so that it is not required for the user to connect the mobile-phone to a personal computer each time communication is to be made like in the conventional technology.

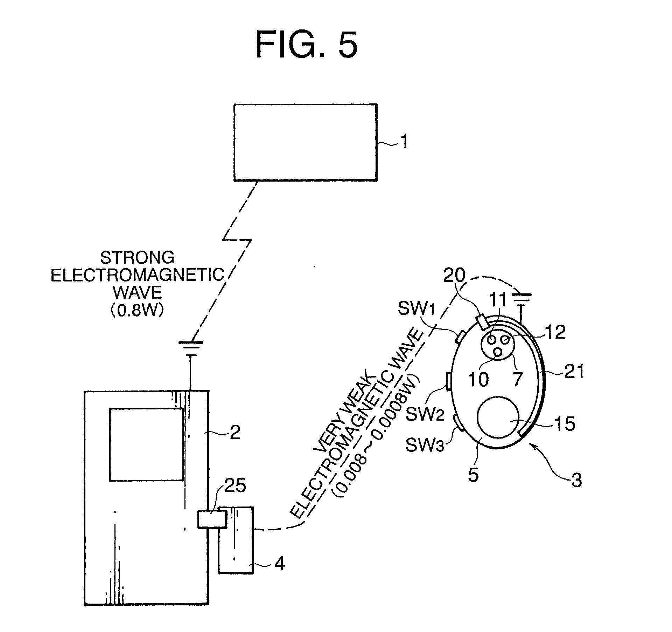

Fig. 5 shows an example in which the transmitter/receiver 4 is set in the ear phone terminal 25 of the mobile-phone 2. Other portions in this example are the same as those in the embodiment described above, so that detailed description thereof is omitted herefrom and the same reference numerals are assigned to the corresponding components. Even in the case where the transmitter/receiver 4 is set in the ear phone terminal 25, the same effects as those provided in the embodiment described above can be expected.

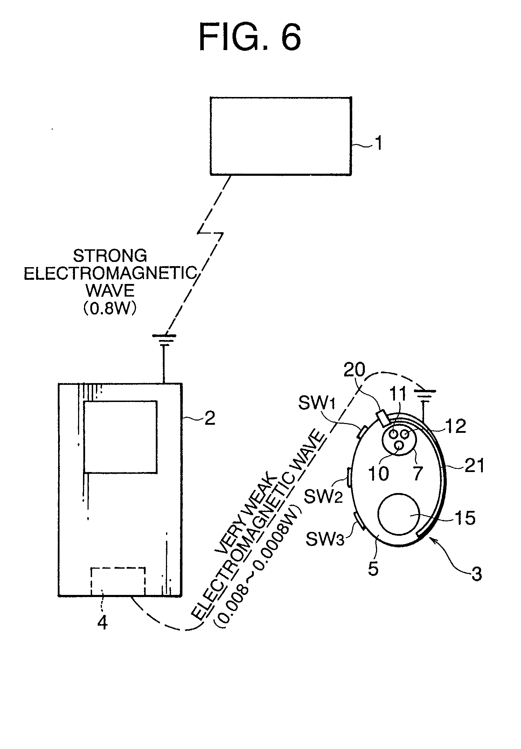

Fig. 6 shows an example in which the transmitter/receiver 4 is not connected to a terminal outside the mobile-phone like in the two examples described above, but in which the transmitter/receiver 4 is incorporated in the mobile-phone 2. Other features of this configuration are the same as those in the embodiment described above, so that detailed description thereof is omitted herefrom and the same reference numerals are assigned to the corresponding sections. Thus, even in the case where the transmitter/receiver 4 is incorporated in the mobile-phone 2, the same effects and advantages as those provided in the other embodiments can be expected.

Although the oscillation phenomenon prevention means in each of the examples described above comprises the switch circuits 38, 42 and the control circuit 45, the configuration is only one of preferable examples, and other configuration is allowable provided that the same effects are provided. The control circuit 45 for providing ON/OFF control over the switch circuits 38, 42 is also only one of the preferable examples, and other type of circuit configuration is allowable provided that the same effects are provided. Although the speakers 12, 53 are provided in the receiver sections 33, 36 respectively, ear phones may be provided therein. In the examples described above, the ear phone has the size adapted to being set in a human ear, but the size may be the same as that of an entrance of a human ear. The mode of setting the transmitter/receiver 5 in the slave handset is only one of the preferable examples, and this invention may be changed or modified according to a variation thereof in its actual use.

## Claims

1. An oscillation prevention circuit used for interactive communication between a first communication apparatus and a second communication apparatus at another point connected to each other via a transmission system (31), wherein a means for preventing an oscillation phenomenon occurring between transmitter/receiver sections in the two communication apparatus is provided in either one of the two communication apparatus.

2. The oscillation prevention circuit of claim 1, wherein one of the two communication apparatus comprises a transmitter section (32) including a microphone (10) for sending a signal such as an audio signal and an amplifier circuit (37), and a receiver section (33) including a speaker (12) or an ear phone for receiving information and an amplifier circuit (43), and the other communication apparatus comprises a transmitter section (35) including a microphone (52) and an amplifier circuit, and a receiver section (36) including a speaker (53) or an ear phone and an amplifier circuit.

3. The oscillation prevention circuit of claim 2, wherein the means for preventing the oscillation phenomenon comprises switch circuits (38, 42) provided in the transmitter section and receiver section respectively for turning ON/OFF a signal flow, and a control circuit (45) for providing controls so that the switch circuit (42) in the receiver section (33) is turned OFF when the switch circuit (38) in the transmitter section (32) is ON and the switch circuit in the receiver section is turned ON when the switch circuit in the transmitter section is OFF.

4. The oscillation prevention circuit of claim 3, wherein the control circuit comprises a pair of switch drive circuits (46, 47) for driving the switch circuit in the transmitter section and that in the receiver section, a flip-flop circuit (48) for alternately running the two switch drive circuits so that the two switch circuits will not be turned ON at the same time, and an oscillation circuit (49) for running this flip-flop circuit.

5. The oscillation prevention circuit of any preceding claim, wherein either one of the two communication apparatus connected to each other is a slave handset (2, 3) for mobile communication such as a mobile-phone; this slave handset for mobile communication comprises a first transmitter/receiver (4) and a second transmitter/receiver (5) arranged at a position where signal transaction can be performed with the first transmitter/receiver; such that when the slave handset (2, 3) receives a radio wave for mobile communication, the first transmitter/receiver (4) transmits a very weak electromagnetic wave weaker than the radio wave to the second transmitter/receiver (5); and the second transmitter/receiver receives the very weak electromagnetic wave from the first transmitter/receiver and, after receiving the signal, transmits a very weak electromagnetic wave to the first transmitter/receiver.

6. The oscillation prevention circuit of claim 5, wherein the second transmitter/receiver (5) has a transmitter/receiver section (7) with a microphone (10) for voice communication, a speaker (11) for indicating an incoming call, and a speaker (12) for voice communication, all integrated into a body having the size adapted to being set in a human ear or corresponding to a human ear's entrance.

7. The oscillation prevention circuit of claim 5, wherein the first transmitter/receiver (4) is incorporated in a communication apparatus (2) for mobile communication, connected to an external connection terminal (6) for mobile communication equipment, or connected to an ear phone terminal (25) for mobile communication equipment.

8. The oscillation prevention circuit of any of Claims 5, 6 or 7 wherein said second transmitter/receiver (5) can communicate with a desired party by selecting the desired party from a plurality of parties registered in a memory of the communication apparatus.

9. The oscillation prevention circuit of any of claims 5 to 8, wherein the very weak electromagnetic wave requires a transmission power of 0.008 W or less.
